# EUROPEAN PATENT APPLICATION

(11) **EP 4 420 866 A1**
(43) Date of publication of application: **28.08.2024**
(21) Application number: 24158765.8
(22) Date of filing: 21.02.2024
(51) Int. Cl.: B29D 11/00, D06P 1/00, H04N 1/54, H04N 1/60

(54) **COLOR INFORMATION ESTIMATION PROGRAM AND COLOR INFORMATION ESTIMATION DEVICE FOR RESIN DYEING PROCESS**

(30) Priority: 24.02.2023 JP 2023027684
(71) Applicant: NIDEK CO., LTD., Gamagori, Aichi (JP)
(72) Inventor: KOYAMA, Mitsuki, Gamagori, Aichi (JP); TANAKA, Motoshi, Gamagori, Aichi (JP); IMAMURA, Motoki, Gamagori, Aichi (JP); ABE, Koji, Gamagori, Aichi (JP)
(74) Representative: Hoefer & Partner Patentanwälte mbB

(57) **Abstract**

A control device sets a target color of a resin body, and searches job data stored in a database for approximate data which are the job data matching a condition that color data satisfies a regulation with the set target color as a reference. The control device generates an estimation formula indicating a correlation between an amount of ink to be printed on a base body and color data of the resin body to be dyed by the base body, based on the searched approximate data. The control device estimates, using the generated estimation formula, at least one of the amount of ink required to be printed on the base body in order to dye the resin body to the target color and a color of the resin body to be dyed when a predetermined amount of ink is printed on the base body, as color information.

## Description

### TECHNICAL FIELD

The present disclosure relates to a color information estimation program and a color information estimation device for estimating information related to a color in a dyeing process of dyeing a resin body.

### BACKGROUND ART

Various techniques for dyeing a resin body such as a plastic lens have been proposed. For example, in a dyeing method called an immersion dyeing method, the resin body is dyed by immersing the resin body in a dyeing solution. However, in the immersion dyeing method, it is difficult to improve a working environment, and it is difficult to dye a kind of the resin body (for example, a lens having a high refractive index).

Therefore, there has been proposed a technique that dyes a resin body by transferring a dye to a surface of the resin body and heating the resin body to which the dye is adhered. For example, in a dyeing method described in JP2018-127722A, a sublimating dye is applied to (printed on) a base body by an ink jet printer. Subsequently, the sublimating dye applied to the base body is sublimated in a state where a resin body and the base body are disposed in a vacuum, whereby the dye is transferred to the resin body. Subsequently, the dye is fixed to the resin body by heating the resin body. A method of transferring the sublimating dye to the resin body by a vapor phase transfer method to dye the resin body is referred to a vapor phase transfer dyeing method.

Further, a technique for appropriately dyeing a resin body to a scheduled color also has been proposed. For example, a dyeing system described in JP2021-021183A measures a color of a resin body that is actually dyed by using a determined discharge amount of dye (ink). The dyeing system aims to correct a discharge amount of dye to be subsequently determined based on the measured color and a scheduled color to bring a color of a resin body to be subsequently dyed to a scheduled color.

### SUMMARY OF INVENTION

A typical object of the present disclosure is to provide a color information estimation program and a color information estimation device capable of more accurately estimating information related to a color for dyeing a resin body by the vapor phase transfer dyeing method.
(1) A color information estimation program executed by a color information estimation device that estimates color information related to a color in a dyeing process of a resin body, the dyeing process including:
   a printing process of printing ink containing a dye on a base body using a printing device;
   a transfer process of transferring the dye contained in the ink to the resin body in a state where the resin body faces the base body on which the ink is printed; and
   a dye fixing process of heating the resin body to which the dye is transferred, to fix the dye to the resin body,
   in which a database stores a plurality of job data including a set of ink amount data indicating an amount of ink printed on a base body and color data measured for a resin body dyed by the base body in the dyeing process performed in the past, and
   the color information estimation program having instructions that, when executed by a control unit of the color information estimation device, cause the color information estimation device to perform:
      a target color setting step of setting a target color of the resin body;
      an approximate data search step of searching the plurality of job data stored in the database for a plurality of approximate data which are the job data at least matching a condition that the color data satisfies a regulation with the set target color as a reference;
      an estimation formula generation step of generating an estimation formula indicating a correlation between an amount of ink to be printed on the base body and color data of the resin body to be dyed by the base body, based on the plurality of approximate data searched in the approximate data search step; and
      a color information estimation step of estimating, using the estimation formula generated in the estimation formula generation step, at least one of an amount of ink required to be printed on the base body in order to dye the resin body to the target color and a color of the resin body to be dyed when a predetermined amount of ink is printed on the base body, as the color information.
(2) The color information estimation program according to the above-identified (1), further having instructions that cause the color information estimation device to perform:
   an temporary estimation formula generation step of generating a temporary estimation formula indicating a correlation between an amount of ink to be printed on the base body and color data of the resin body to be dyed by the base body, based on temporary estimation job data including a plurality of job data of dyeing process in which it is determined that no fixing failure of the dye to the resin body occurs, and in which at least one of a type of used ink and an amount of the used ink differs from each other between the plurality of job data, and
   in the estimation formula generation step, the estimation formula is generated based on the temporary estimation formula and the plurality of approximate data.
(3) The color information estimation program according to the above-identified (2),
   in which the plurality of temporary estimation job data include the job data acquired as a result of heating a resin body to which no dye is transferred as is a case with the dye fixing process.
(4) The color information estimation program according to the above-identified (2),
   in which in the temporary estimation formula generation step, the temporary estimation formula is generated for each of a plurality of types of resin body materials, based on the temporary estimation job data for the same material, and
   in the estimation formula generation step, the estimation formula is generated based on the temporary estimation formula for a material for which the color information is to be estimated and the plurality of approximate data.
(5) The color information estimation program according to the above-identified (2), further having instructions that cause the color information estimation device to perform:
   a temporary estimation process setting step of automatically setting parameters of the dyeing process necessary for acquiring each of the plurality of temporary estimation job data.
(6) The color information estimation program according to the above-identified (2),
   in which the plurality of temporary estimation job data include the job data acquired in the dyeing process using a single color ink, for each of a plurality of colors of ink.
(7) The color information estimation program according to the above-identified (1),
   in which the database stores the plurality of job data in a state where it enables to identify a material of the resin body dyed when each job data is generated, and
   in the approximate data search step, the plurality of approximate data are searched on a condition that the approximate data is the job data for a material identical to a material of a designated resin body.
(8) A color information estimation device that estimates color information related to a color in a dyeing process of a resin body, the dyeing process including:
   a printing process of printing ink containing a dye on a base body using a printing device;
   a transfer process of transferring the dye contained in the ink to the resin body in a state where the resin body faces the base body on which the ink is printed; and
   a dye fixing process of heating the resin body to which the dye is transferred, to fix the dye to the resin body,
   in which a database stores a plurality of job data including a set of ink amount data indicating an amount of ink printed on a base body and color data measured for a resin body dyed by the base body in the dyeing process performed in the past, and
   a control unit of the color information estimation device is configured to:
      set a target color of the resin body;
      search the plurality of job data stored in the database for a plurality of approximate data which are the job data at least matching a condition that the color data satisfies a regulation with the set target color as a reference;
      generate an estimation formula indicating a correlation between an amount of ink to be printed on the base body and color data of the resin body to be dyed by the base body, based on the plurality of approximate data searched; and
      estimate, using the generated estimation formula, at least one of an amount of ink required to be printed on the base body in order to dye the resin body to the target color and a color of the resin body to be dyed when a predetermined amount of ink is printed on the base body, as the color information.

The color information estimation program and the color information estimation device according to the present disclosure easily enable to more accurately estimate the information related to the color for dyeing the resin body by the vapor phase transfer dyeing method.

### BRIEF DESCRIPTION OF DRAWINGS

FIG. 1 is a block diagram showing a system configuration of a dyeing system 1.
FIG. 2 is a perspective view of a dyeing tray 80 in a state where two lenses L are installed, as viewed obliquely from an upper right side.
FIG. 3 is a flowchart of a color information estimation processing performed by a control device (color information estimation device) 70.
FIG. 4 is a diagram showing an example of a job data list display screen 100.
FIG. 5 is a diagram showing an example of a measurement color data display screen 120.
FIG. 6 is a flowchart of a temporary estimation job data acquisition processing performed in the color information estimation processing.
FIG. 7 is a diagram showing an example of a temporary estimation job display screen 130.
FIG. 8 is a flowchart of an estimation processing performed in the color information estimation processing.
FIG. 9 is a diagram showing an example of a color estimation screen 200 immediately after display.
FIG. 10 is a diagram showing an example of a search condition setting screen 300.
FIG. 11 is a diagram showing an example of the color estimation screen 200 after color information and an amount of ink are estimated based on the state shown in FIG. 9.

### DESCRIPTION OF EMBODIMENTS

### <Overview>

A color information estimation device exemplified in the present disclosure estimates information (color information) related to a color in a dyeing process of a resin body. The dyeing process includes a printing process, a transfer process, and a dye fixing process. In the printing process, ink containing a dye is printed on a base body by a printing device. In the transfer process, the dye contained in the ink is transferred to the resin body in a state where the resin body faces the base body on which the ink is printed. In the dye fixing process, the dye is fixed to the resin body by heating the resin body to which the dye is transferred. A database stores a plurality of job data including a set of data of an amount of ink (ink amount data) printed on a base body and color data measured for a resin body dyed by the base body in the dyeing process performed in the past. The color information estimation device performs a target color setting step, an approximate data search step, an estimation formula generation step, and a color information estimation step. In the target color setting step, a control unit of the color information estimation device sets a target color of the resin body. In the approximate data search step, the control unit searches the plurality of job data stored in a database for a plurality of approximate data which are the job data at least matching a condition that the color data satisfies a regulation with the set target color as a reference. In the estimation formula generation step, the control unit generates an estimation formula indicating a correlation between an amount of ink to be printed on the base body and color data of the resin body to be dyed by using the base body on which the corresponding amount of ink is printed, based on the plurality of approximate data searched in the approximate data search step. In the color information estimation step, the control unit estimates, using the estimation formula generated in the estimation formula generation step, at least one of an amount of ink required to be printed on the base body in order to dye the resin body to the target color and a color of the resin body to be dyed when a predetermined amount of ink is printed on the base body, as the color information.

According to the color information estimation program and the color information estimation system of the present disclosure, an estimation formula for estimating the color information is generated based on the job data including a set of the ink amount data and the color data in the dyeing process performed in the past. Therefore, the color information is easily estimated more accurately in a state where the influence on a change in a degree of dyeing due to an individual difference in printing devices, an installation environment of a dyeing system, an individual difference in heating units that heat a resin body, and the like is reduced.

Furthermore, according to the technique of the present disclosure, an estimation formula for estimating the color information is generated based on the plurality of job data (approximate data) whose color data satisfies the regulation with the set target color as a reference. When the dyeing process is performed a plurality of times, as long as colors of resin bodies to be dyed are approximate, the amounts of ink to be used (for example, a total amount of ink to be discharged per unit area and a mixed amount of a plurality of types of ink) are also approximate. As long as the amount of ink to be used is approximate, a degree of dyeing of the resin body is also easily approximate. Therefore, by generating the estimation formula based on the plurality of job data having approximate colors, the color information is easily estimated more accurately in a state where the influence on the change in the degree of dyeing due to a change in the amount of ink to be used is reduced.

In a vapor phase transfer dyeing method, when the amount of ink to be used is changed, a degree of re-sublimation of the dye in the dye fixing process also changes. In contrast, according to the technique of the present disclosure, an estimation formula is generated based on the plurality of job data in which the degree of re-sublimation of the dye is also approximate. Therefore, the technique of the present disclosure is more useful particularly in the case of using the vapor phase transfer dyeing method. Further, in the transfer process, when the dye is transferred to the resin body in a state where the resin body faces the base body on which the ink is printed in a non-contact manner, the change in the degree of dyeing due to the change in the amount of ink to be used is likely to be large as compared with a case in which the resin body is brought into contact with the base body. Therefore, the technique of the present disclosure is more effective when the resin body faces the base body in a non-contact manner. However, the technique of the present disclosure is also effective when the transfer process is performed by bringing the resin body into contact with the base body. In addition, the technique of the present disclosure can be effectively used in a case in which the resin body is dyed by using a dyeing method different from the vapor phase transfer dyeing method.

The job data referred to for generating the estimation formula may be data of the dyeing process performed in the past by the same dyeing system as the dyeing system using the color information estimated by the estimation formula. In this case, the color information is easily estimated more accurately in a state where the influence on the change in the degree of dyeing due to a difference in the dyeing system is reduced.

The control unit may further perform a temporary estimation formula generation step of generating a temporary estimation formula indicating a correlation between an amount of ink to be printed on a base body and color data of a resin body to be dyed by using the base body on which the corresponding amount of ink is printed, based on a plurality of temporary estimation job data. The temporary estimation job data is job data of the dyeing process in which it is determined that no fixing failure of the dye to the resin body occurs. The plurality of temporary estimation job data include the plurality of job data in which at least one of a type of used ink and an amount of the used ink differs from each other between the plurality of job data. In the estimation formula generation step, an estimation formula may be generated based on the temporary estimation formula and the plurality of approximate data.

The temporary estimation formula shows the correlation between the amount of ink and the color data when it is assumed that no fixing failure of the dye to the resin body occurs. When no fixing failure of the dye occurs, the color information can be estimated by the temporary estimation formula. However, in an actual dyeing process, a degree of fixing failure of the dye to the resin body often changes depending on the colors of the resin body to be dyed. Therefore, the approximate data searched according to the target color may be job data in which a fixing failure of the dye depending on the color to be dyed occurs. Therefore, when an estimation formula is generated, the estimation formula is generated in which the influence of the fixing failure of the dye depending on the color to be dyed is appropriately considered while the temporary estimation formula is used as a base by referring to both the temporary estimation formula and the plurality of approximate data searched. As a result, an accuracy of color estimation is more easily improved.

A specific method for generating an estimation formula based on the temporary estimation formula and the plurality of approximate data searched can be appropriately selected. For example, a formula indicating an error correlation between the color data obtained by the temporary estimation formula and the color data of the searched approximate data may be generated as the estimation formula. In this case, the estimation formula is generated in which the influence of the fixing failure of the dye depending on the color to be dyed is appropriately considered.

The plurality of temporary estimation job data may include the job data (hereinafter, referred to as "clear data") acquired as a result of heating a resin body to which no dye is transferred as is the case with the dye fixing process. When the resin body is heated in the dye fixing process, a phenomenon in which the resin body is slightly discolored (referred to as "yellowing" or the like) may occur. When the temporary estimation job data includes the clear data, a temporary estimation formula reflecting the influence of discoloration of the resin body due to the dye fixing process is generated. As a result, an accuracy of color estimation is more easily improved.

In the temporary estimation formula generation step, the temporary estimation formula may be generated for each of a plurality of types of resin body materials, based on the temporary estimation job data for the same material. In the estimation formula generation step, the estimation formula may be generated based on the temporary estimation formula for a material for which the color information is to be estimated and the plurality of approximate data. Even when the resin body is dyed to the same color, different ink may be used when the materials of the resin body are different. In addition, even when the resin bodies of different materials are dyed using the same ink, a degree of dyeing may change depending on the materials. On the other hand, the temporary estimation formula is generated for each of the plurality of types of resin body materials, based on the temporary estimation job data for the same material, whereby the color information is easily estimated appropriately depending on the material.

The control unit may further perform a temporary estimation process setting step of automatically setting parameters of the dyeing process necessary for acquiring each of the plurality of temporary estimation job data. In this case, by executing the dyeing process in accordance with the automatically set parameters, appropriate temporary estimation job data is easily acquired and stored in the database. Therefore, the color information is easily estimated with higher accuracy by a simple procedure.

The plurality of temporary estimation the job data may include job data acquired in the dyeing process using ink of a single color, for each of a plurality of colors of ink. In this case, when the temporary estimation formula is generated, data can be processed for a color of each ink, and thus the temporary estimation formula is easily generated more appropriately.

Further, the plurality of temporary estimation job data may include a plurality of job data acquired by executing the dyeing process a plurality of times by changing a density of the ink of the single color. In this case, an appropriate temporary estimation formula in consideration of a change in the density of the ink of the single color is easily generated.

It is also possible to change a method of acquiring temporary estimation job data. For example, the job data acquired by using a plurality of colors of ink may be included in a part of the plurality of temporary estimation job data.

The database may store the plurality of job data in a state where it enables to identify a material of the resin body dyed when each job data is generated. In the approximate data search step, the plurality of job data may be searched for the plurality of approximate data on a condition that the approximate data is the job data for a material identical to a material of a designated resin body. As described above, even when the resin body is dyed to the same color, different ink may be used when the materials of the resin body are different. In addition, even when the resin bodies of different materials are dyed using the same ink, a degree of dyeing may change depending on the materials. On the other hand, the estimation formula is generated based on the approximate data for the same material as the designated material of the resin body, and the color information is estimated based on the generated estimation formula, whereby the color information is easily estimated appropriately depending on the material.

It is also possible to change the condition for searching the plurality of job data for the approximate data. For example, at least one of a condition in which a diopter in a case in which the resin body is a lens is within a specified range, a condition in which a timing at which at least one of the various processes in the dyeing is performed is within a specified range, a condition in which a total amount of used ink is within a specified range, a condition in which the devices used in the various processes are the same, and the like may be added to the search condition of the approximate data depending on an instruction input by a user. In this case, the approximate data closer to a desired dyeing condition is searched, and thus the accuracy of color estimation is further improved. At least one of the plurality of "specified ranges" described above may be determined in advance or may be freely designated by the user.

The control unit may perform a candidate exclusion step of excluding the job data designated by an operator among the plurality of job data stored in the database from candidates searched for the approximate data in the approximate data search step. The operator excludes job data having low reliability

(for example, the job data in which a dyeing result is significantly different from an expected result) from the search targets of the approximate data, thereby reducing a possibility that the accuracy of color estimation is lowered by the job data having low reliability.

The control unit may perform a data automatic deletion step of deleting the job data from the database in order of generation time when the number of the plurality of job data stored in the database exceeds an upper limit. Further, the control unit may perform a deletion target exclusion step of excluding the job data designated by the operator among the plurality of job data stored in the database from the targets to be deleted in the data automatic deletion step. In this case, an amount of data stored in the database is presented from excessively increasing, and the job data determined to be necessary for the color estimation is continuously stored in the database appropriately.

### <Embodiment>

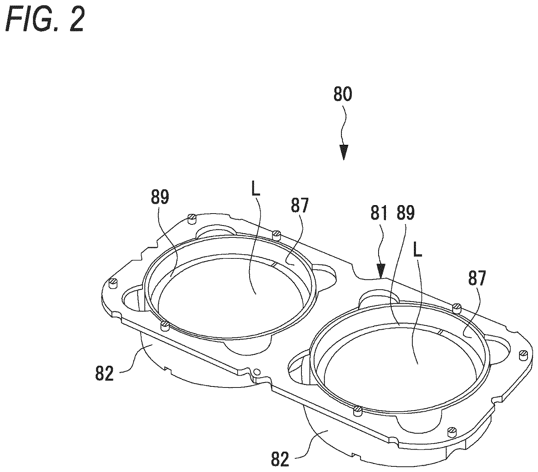

Hereinafter, one of typical embodiments according to the present disclosure will be described with reference to the drawings. A dyeing system 1 automatically and continuously dyes a resin body. In the present embodiment, the resin body to be dyed is plastic lenses L (see FIG. 2 and the like) used for eyeglasses. However, at least a part of the techniques exemplified in the present disclosure can also be applied to a case in which a resin body other than the lens L is dyed. For example, in a case in which various resin bodies such as goggles, a cover of a mobile phone, a cover for light, an accessory, a toy, a film (for example, having a thickness of 400 µm or less), and a plate material (for example, having a thickness of 400 µm or more) are dyed, at least a part of the techniques exemplified in the present disclosure can also be applied. The resin body to be dyed also includes a resin body added to a member (for example, wood or glass) different from the resin body. In addition, the dyeing system 1 according to the present embodiment performs dyeing while continuously transporting a plurality of resin bodies. However, at least a part of the techniques exemplified in the present disclosure can also be adopted in a dyeing system in which resin bodies are dyed by being transported one set at a time. In addition, the techniques exemplified in the present disclosure can also be applied to a case in which an operator performs at least a part of a plurality of dyeing processes.

### (System Configuration)

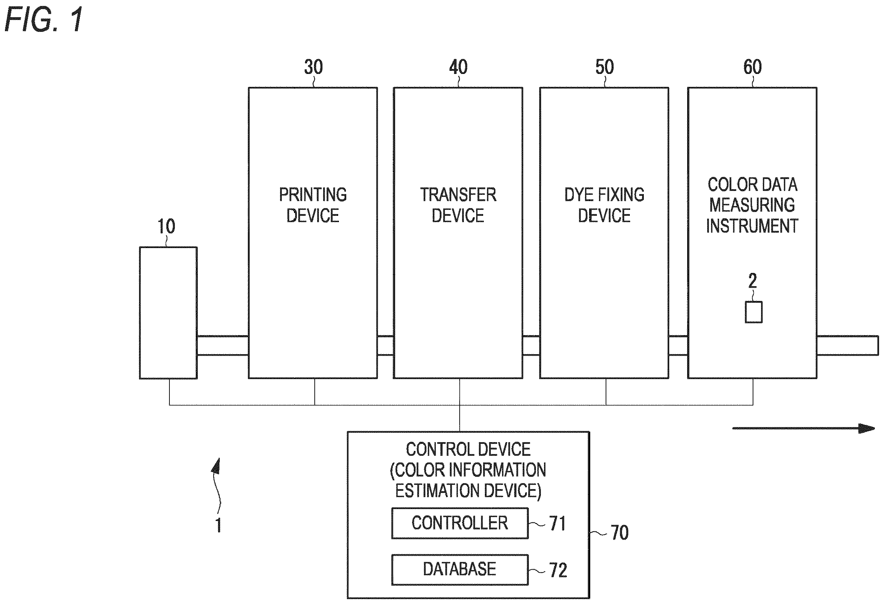

A system configuration of the dyeing system 1 according to the present embodiment will be schematically described with reference to FIG. 1. The dyeing system 1 according to the present embodiment includes a transport device 10, a printing device 30, a transfer device 40, a dye fixing device 50, a color data measuring instrument 60, and a control device (color information estimation device) 70.

The transport device 10 transports a dyeing tray 80 (see FIG. 2) on which the lenses L that are resin bodies are placed to each device in the dyeing system 1. Specifically, the transport device 10 according to the present embodiment continuously transports a plurality of dyeing trays 80 in the dyeing system 1. The transport device 10 according to the present embodiment transports the dyeing trays 80 in an order of the printing device 30, the transfer device 40, the dye fixing device 50, and the color data measuring instrument 60 (that is, from left to right in FIG. 1).

The printing device 30 performs a printing process. In the printing process, the printing device 30 prints ink containing a dye on a sheet-shaped base body. In the present embodiment, paper having an appropriate hardness or a metallic (in the present embodiment, aluminum) film is used as the base body. However, it is also possible to use other materials such as a glass plate, a heat-resistant resin, and ceramic as a material of the base body. In the dyeing system 1 according to the present embodiment, in order to appropriately transfer the dye to the lens L while preventing aggregation or the like of the dye, the dye of the base body is heated in a state where the base body and the lens L are separated from each other (in a non-contact manner) and opposed to each other in a vacuum (including substantially vacuum) environment, whereby the dye is transferred (vapor-deposited) to a surface of the lens L (a dyeing method in the present embodiment is referred to as a phase transfer dyeing method). Therefore, an inkjet printer that prints ink containing a sublimating dye on a base body is used as the printing device 30. The printing device 30 performs printing based on print data generated by the control device 70 which is an information processing device (in the present embodiment, a personal computer (hereinafter referred to as a "PC")). As a result, an appropriate amount of ink (dye) is adhered to an appropriate position of the base body. It is also easy to produce a dye-adhered base body for gradational dyeing. The configuration of the printing device 30 may be changed. For example, the printing device may be a laser printer. In this case, a toner may contain a sublimating dye.

The transfer device 40 performs a transfer process. In the transfer process, the transfer device 40 transfers the dye attached to the base body (that is, the dye contained in the ink printed on the base body) from the base body to the lens L in a state where the base body on which the ink is printed is opposed to the lens L. As described above, in the present embodiment, the dye is transferred from the base body to the lens L by using a vapor phase transfer method in a state where the base body is opposed to the lens L in a non-contact manner. However, the method of transferring the dye to the lens L may be changed. For example, the dye may be transferred from the base body to the lens L in a state where the dye of the base body and the lens L are in contact with each other.

The dye fixing device 50 performs a dye fixing process. In the dye fixing process, the dye fixing device 50 heats the lens L to which the dye is transferred by the transfer device 40 to fix the dye adhered to the surface of the lens L on the resin body. The dye fixing device 50 according to the present embodiment heats the lens L by irradiating the lens L with a laser beam which is an electromagnetic wave. The configuration of the dye fixing device 50 may be changed. For example, a device (for example, an oven) that irradiates the lens L with an electromagnetic wave other than the laser beam may be used as the dye fixing device.

The color data measuring instrument 60 measures color data of the lens L dyed in the printing process by the printing device 30, the transfer process by the transfer device 40, and the dye fixing process by the dye fixing device 50. The color data measuring instrument 60 according to the present embodiment is a spectroscopic measuring instrument that measures a spectral spectrum (specifically, in the present embodiment, a transmission spectrum) of the lens L as the color data. Therefore, the color data is acquired in a state where the influence of ambient light such as an illumination environment is reduced as compared with a case in which an RGB camera or the like is used. In addition, the spectral spectrum which is a distribution of a density for each wavelength is acquired even in a case in which the lens L is dyed using a plurality of dyes, and thus the color data of the dyed lens L is appropriately acquired. By using the data of the acquired spectral spectrum, values of a CIE L*a*b* color system, an XYZ color system, an L*C*h* color system, a Munsell color system, and the like may be used. However, a device other than the spectroscopic measuring instrument (for example, an RGB camera) may be used as a color data measuring instrument.

The control device 70 performs various controls in the dyeing system 1. In the present embodiment, the control device 70 functions as the color information estimation device that estimates information related to a color (hereinafter, referred to as "color information") in a dyeing process performed by the dyeing system 1. Although the details will be described later, in the present embodiment, at least one of the amount of ink required to be printed on the base body in order to dye the lens L (the resin body) to the target color and the color (the color data to be measured) of the lens L to be dyed when the ink is printed on the base body by a predetermined amount is estimated as the color information.

Various information processing devices (for example, at least one of a PC, a server, and a mobile terminal) can be used as the control device 70. The control device 70 includes a controller (for example, a CPU) 71 that performs control, and a database 72 that stores various data (for example, job data to be described later). The configuration of the control device 70 may be changed. First, a plurality of devices may cooperate to function as the control device 70. For example, a control device that performs various controls in the dyeing system 1 and a control device including the database 72 may be separate devices. In addition, controllers of the plurality of devices may cooperate with one another to perform various controls in the dyeing system 1. For example, in many cases, at least one of the transport device 10, the printing device 30, the transfer device 40, the dye fixing device 50, and the color data measuring instrument 60 includes a controller. In this case, the controller of the control device 70 and a controller of another device may cooperate with each other to control the dyeing system 1.

The dyeing system 1 includes a reading unit 2 that reads information on the lens L to be dyed for each transported unit (including the dyeing tray 80 and the lens L placed on the dyeing tray 80). As an example, the reading unit 2 according to the present embodiment is an identifier reading unit that reads an identifier provided for each transported unit (for example, for each dyeing tray 80). The unit is specified by the identifier read by the reading unit 2. By specifying the unit, data of a scheduled color (color to be dyed) corresponding to the lens L provided in the unit, data of the amount of ink printed on the base body to dye the lens L to the scheduled color, color data measured by the color data measuring instrument 60 on the dyed lens L, and the like are managed.

The reading unit 2 according to the present embodiment is an identifier reader (for example, a QR code (registered trademark) reader, a bar code reader, and an identification hole reader) corresponding to an identifier that is used. In addition, the reading unit 2 may be a tag reading unit that reads information from a tag (for example, an IC tag) in which information may be written. In this case, data corresponding to each unit may be stored in the tag. FIG. 1 only illustrates the reading unit 2 provided in the color data measuring instrument 60 among the plurality of devices constituting the dyeing system 1. However, the reading unit 2 is also provided in a portion of the dyeing system 1 other than the color data measuring instrument 60.

The dyeing tray 80 used in the dyeing system 1 according to the present embodiment will be described with reference to FIG. 2. FIG. 2 is a perspective view of the dyeing tray 80 in a state where the two lenses L are installed (placed) and no base body is installed. The dyeing tray 80 according to the present embodiment includes a tray main body 81, placement frames 89, and spacers 87. A resin body (in the present embodiment, the lens L) to be dyed is placed on each of the placement frames 89. The placement frame 89 according to the present embodiment is formed in a ring shape having an outer diameter slightly larger than that of the lens L. Each of the spacers 87 extends upward in a tubular shape (cylindrical shape) from an outer circumferential portion of a portion of the placement frame 89 on which the lens L is placed, the tray main body 81 is formed with attachment portions 82. The placement frame 89 and the spacer 87 are detachably attached on the attachment portion 82. In the present embodiment, two attachment portions 82 are formed at one tray main body 81. Therefore, the pair of (right and left) lenses L used for one pair of glasses is dyed in a state of being placed on one dyeing tray 80.

### (Color Information Estimation Processing)

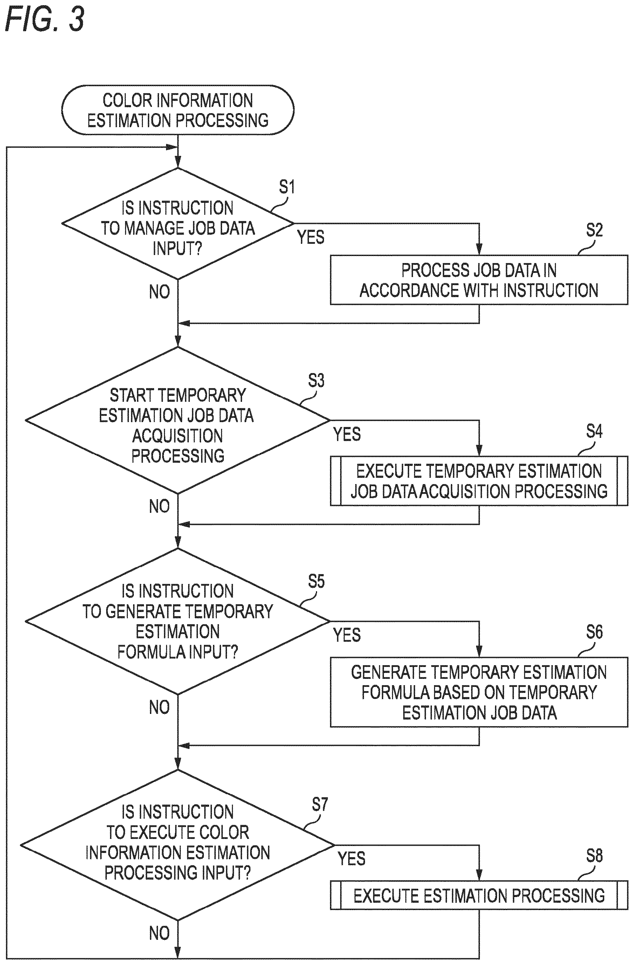

A color information estimation processing performed by the control device (color information estimation device) 70 according to the present embodiment will be described with reference to FIGS. 3 to 11. In the color information estimation processing, at least one of the amount of ink required to be printed on the base body in order to dye the lens to the target color and the color (the color data estimated to be measured by the color data measuring instrument 60) of the lens to be dyed when the ink is printed on the base body by a predetermined amount is estimated as the color information. When an instruction to perform the color information estimation processing is input, the controller 71 of the control device 70 performs the color information estimation processing shown in FIG. 3 in accordance with a color information estimation program stored in the database 72.

As shown in FIG. 3, when the color information estimation processing is started, the control device 70 determines whether an instruction to manage the job data is input by the user (for example, the operator) (S1). The job data includes a set of data of the amount of ink (ink amount data) printed on the base body in the dyeing process performed in the past and the color data measured by the color data measuring instrument 60 for the lens dyed by the base body. In the present embodiment, the database 72 stores a plurality of job data.

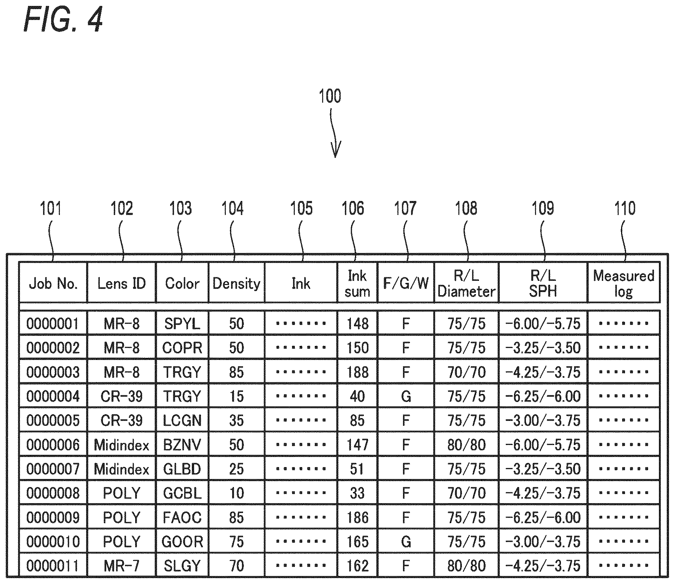

FIG. 4 is a diagram showing an example of a job data list display screen 100 displayed on a display device. In the example shown in FIG. 4, each piece of job data includes a "Job No." 101 which is a number for specifying the job data, a "Lens ID" 102 which indicates a material of a lens, a "Color" 13 which indicates a name of a color in the job data, a "Density" 104 which indicates a density of the color, an "Ink" 105 which indicates ink amount data of each used ink, an "Ink sum" 106 which indicates a total amount of used ink, an "F/G/W" 107 which indicates whether a type of dyeing is a full dyeing (F: Full), a gradation (G), or a W color (W), an "R/L Diameter" 108 which indicates diameters of right and left lenses, an "R/L SPH" 109 which indicates powers of the right and left lenses (only cylindrical powers are shown in FIG. 4), a "Measured log" 110 which indicates color data measured by the color data measuring instrument 60, and the like. Each piece of job data includes other information (for example, information indicating a generated time or a stored timing), but a detailed description thereof will be omitted. In addition, the material of the lens can be freely set. For example, the material of the lens may include at least one of CR-39, POLY, MR-7, MR-8, Midindex, and the like. It is also possible for the user to add a material of the lens.

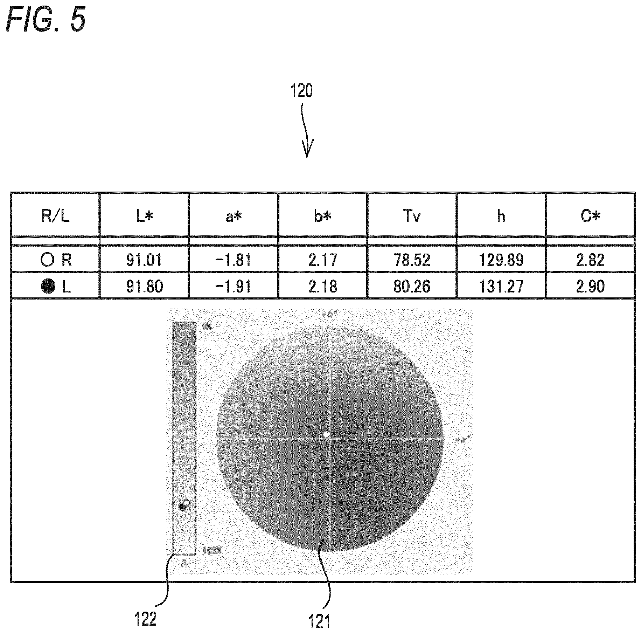

FIG. 5 shows an example of a measurement color data display screen 120 showing the details of the color data measured by the color data measuring instrument 60 for specific job data. A specific method for expressing color data can be appropriately selected. As an example, in the present embodiment, the color data of each of the left and right lenses "R/L" is expressed by a brightness (L*), a hue (a*, b*), a luminous transmittance (Tv), a hue angle (h), and a saturation (C*). Further, in the present embodiment, the color corresponding to the designated color data is displayed in each of a color space chromaticity diagram 121 and a luminous transmittance display portion 122.

However, in addition to the values shown in FIG. 5, other values (for example, at least one of a transmittance of a designated wavelength, a color difference between the left and right lenses, and a color difference with respect to specific color data) may be used. In addition, the color data may be expressed by different color systems (for example, at least one of an RGB color system and an XYZ color system).

The job data referred to in the subsequent processing is data of the dyeing process performed in the past by the same dyeing system 1 as the dyeing system 1 using the color information estimated by the color information estimation processing. Therefore, the color information is easily estimated more accurately in a state where the influence on a change in a degree of dyeing due to a difference in the dyeing system is reduced.

The description of FIG. 3 is referred to again. In the present embodiment, the user operates an operation unit (not shown) to designate any one of the plurality of job data displayed on the job data list display screen 100 and the like and input an instruction to designate a management content of the job data, thereby causing the control device 70 to execute various managements of the job data. If no instruction to designate a management content is input (S1: NO), the process proceeds to S3.

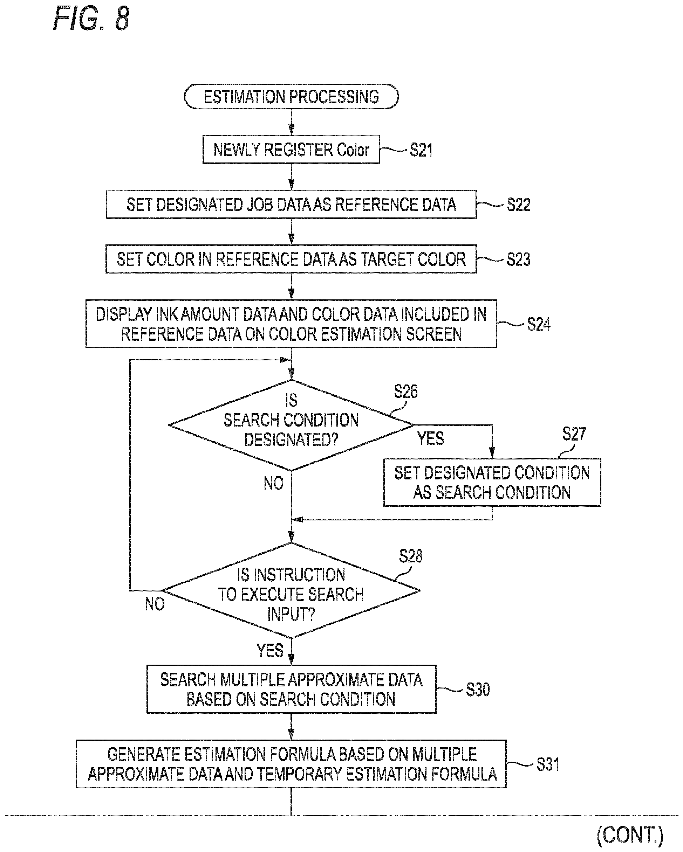

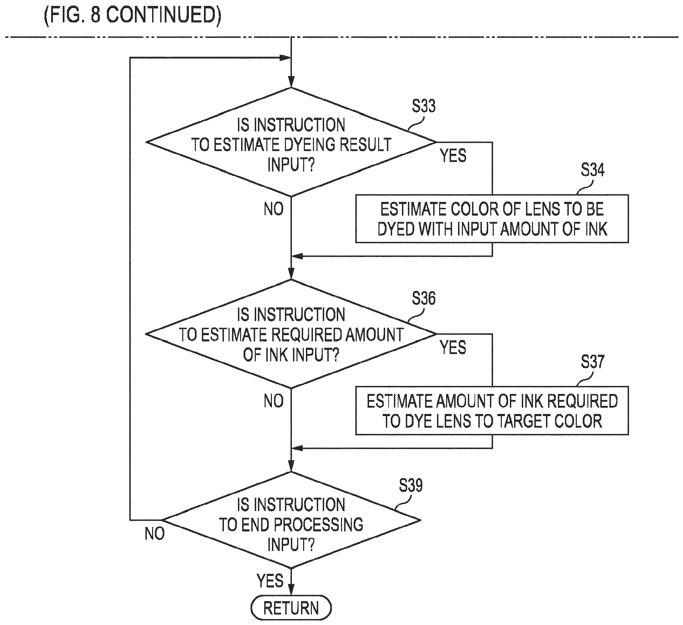

When the instruction to designate a management content is input (S1: YES), the control device 70 processes the job data depending on the input instruction (S2). For example, when an instruction to change the designated job data to data having low reliability is input, the control device 70 excludes the designated job data from targets of a search processing of approximate data (see S30 in FIG. 8, the details of which will be described later) used for estimating the color information. Therefore, the user excludes job data having low reliability (for example, the job data in which a dyeing result is significantly different from an expected result) from the targets of the search processing of the approximate data, thereby reducing a possibility that an accuracy of color estimation is lowered by the job data having low reliability.

The control device 70 can perform a data automatic deletion processing of deleting the job data from the database 72 in order of generation time when the number of the plurality of job data stored in the database 72 exceeds an upper limit. In S1, when an instruction to exclude the job data designated by the user from the targets of the data automatic deletion processing is input, the control device 70 excludes the designated job data from the automatically deleted targets by including the designated job data in a keep list which is excluded from the targets of the data automatic deletion processing. Therefore, an amount of data stored in the database 72 is presented from excessively increasing, and the job data determined to be necessary for the color estimation is continuously stored in the database 72 appropriately.

In S2, other processing can be performed. For example, when a search condition of the job data is designated in S1, the control device 70 may search the plurality of job data for the job data matching the designated search condition and cause the display device to display the job data. In S2, the detailed information related to the designated job data (for example, the measurement color data display screen 120 shown in FIG. 5) may be output depending on the instruction input by the user.

Subsequently, the control device 70 determines whether an instruction to start a temporary estimation job data acquisition processing is input by the user (S3). Temporary estimation job data is job data of the dyeing process in which it is determined that no fixing failure of the dye to the lens occurs. Although the details will be described later, a temporary estimation formula is generated based on a plurality of temporary estimation job data (S6). The temporary estimation formula shows a correlation between the amount of ink to be printed on the base body and the color data of the lens to be dyed by the base body when no fixing failure of the dye to the lens occurs, the color data being measured by the color data measuring instrument 60. In an estimation processing (S8) to be described later, the color information is estimated based on both the temporary estimation formula and the job data (approximate data) close to the target color. If no instruction to start the temporary estimation job data acquisition processing is input (S3: NO), the process proceeds to S5. When the instruction to start the temporary estimation job data acquisition processing is input (S3: YES), the control device 70 performs the temporary estimation job data acquisition processing (S4).

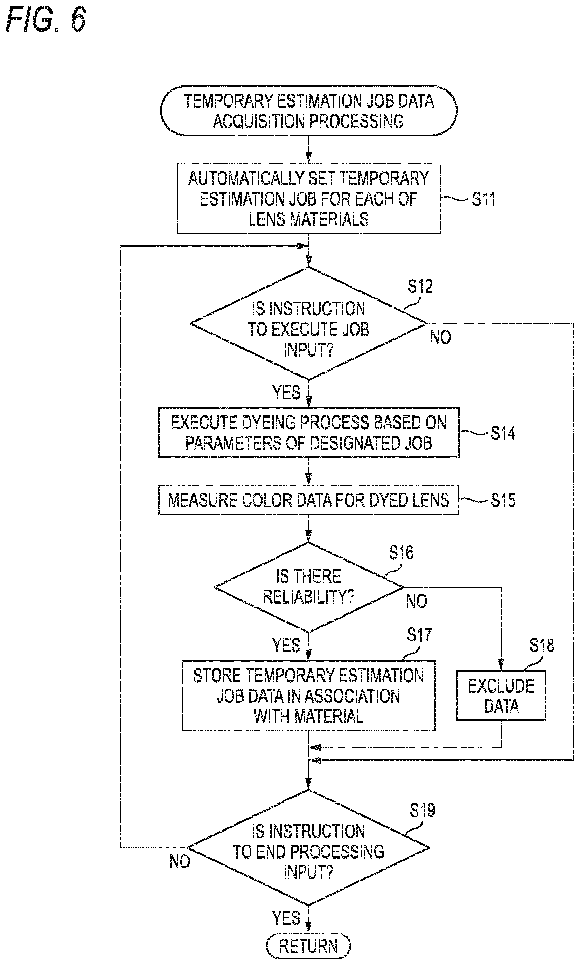

The temporary estimation job data acquisition processing will be described in detail with reference to FIG. 6. First, the control device 70 automatically sets, for each of a plurality of types of lens materials (that is, for at least one of a plurality of types of materials), a temporary estimation job that defines parameters of the dyeing process for acquiring the temporary estimation job data (S11). As an example, in the present embodiment, for each of the lens materials, a plurality of temporary estimation jobs necessary for appropriately generating a temporary estimation formula corresponding to the material are determined in advance. The user operates the operation unit, designates a lens material, and then inputs an instruction to set a temporary estimation job. In S 11, the control device 70 automatically sets the plurality of temporary estimation jobs for the designated material. By performing the dyeing process in accordance with the automatically set parameters (temporary estimation jobs), appropriate temporary estimation job data is easily acquired and stored in the database 72. Therefore, the color information is easily estimated with higher accuracy by a simple procedure.

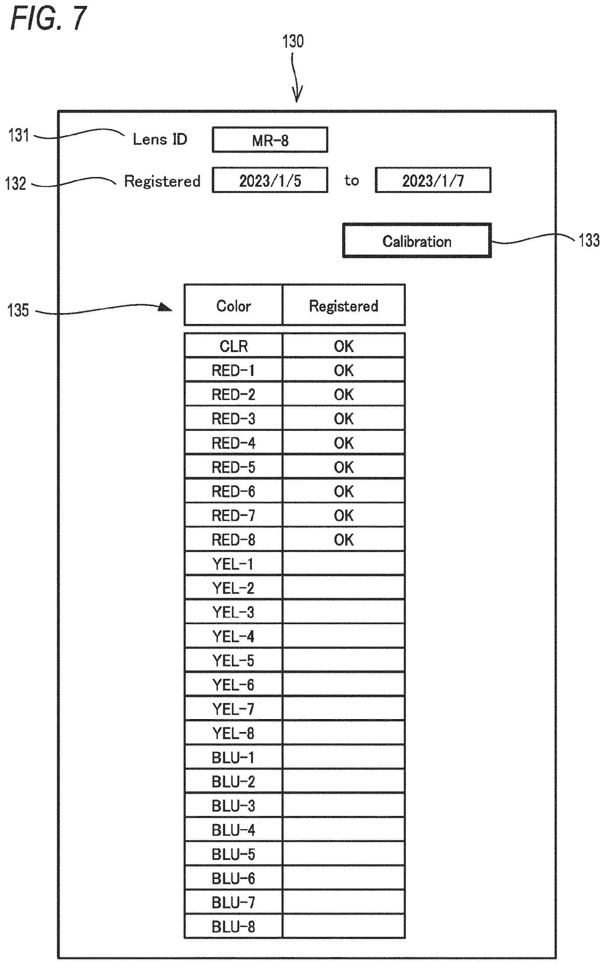

FIG. 7 shows an example of a temporary estimation job display screen 130 displayed on the display device. The temporary estimation job display screen 130 illustrated in FIG. 7 includes a lens material display portion 131, a registration time display portion 132, a temporary estimation formula generation button 133, and a temporary estimation job display portion 135. The lens material display portion 131 displays a material of a lens ("MR-8" in the example shown in FIG. 7) corresponding to the set temporary estimation job. The registration time display portion 132 displays a time when the plurality of temporary estimation job data are acquired (stored) based on the set temporary estimation jobs. The temporary estimation formula generation button 133 is operated by the user when the control device 70 is caused to generate a temporary estimation formula based on the acquired plurality of temporary estimation job data. The temporary estimation formula generation button 133 is operated after all the temporary estimation job data for the designated material is acquired (the details will be described later). The temporary estimation job display portion 135 displays the plurality of temporary estimation jobs set for the designated material and information indicating whether the temporary estimation job data based on each of the temporary estimation jobs has been acquired. In the example shown in FIG. 7, when the temporary estimation job data based on the temporary estimation job has been acquired, "OK" is displayed in "Registered".

The parameters of the plurality of temporary estimation jobs set for each material are set such that at least one of the type of ink and the amount of ink to be printed on the base body is different for each process in the printing process included in the dyeing process. Therefore, when the plurality of temporary estimation job data are acquired based on the plurality of temporary estimation jobs, in the temporary estimation formula generated based on the plurality of temporary estimation job data, the correlation between the amount of ink and the color of the lens to be dyed is appropriately indicated regardless of the type and amount of ink to be used.

In the present embodiment, the plurality of temporary estimation jobs include a temporary estimation job (that is, a temporary estimation job in which the dye fixing process is performed without using the ink at all) that causes a resin body to which no dye is transferred to perform a heating processing of the lens similar to the dye fixing process. In the example shown in FIG. 7, a temporary estimation job of "CLR" displayed on the temporary estimation job display portion 135 is set as a temporary estimation job not using ink (ink unused job). Based on the ink unused job, job data in which no ink is used (hereinafter referred to as "clear data") is acquired by executing the same processes as the other processes in the dyeing process on the lens. When the lens is heated in the dye fixing process, a phenomenon in which the lens is slightly discolored (referred to as "yellowing" or the like) may occur. When the temporary estimation job data includes the clear data, a temporary estimation formula reflecting the influence of discoloration of the resin body due to the dye fixing process is generated. As a result, an accuracy of color estimation is more easily improved.

In the present embodiment, the plurality of temporary estimation jobs include a temporary estimation job for causing the dyeing process to be performed using ink of a single color (that is, each of "RED (red)", "YEL (yellow)", and "BLU (blue)") for each of a plurality of colors of ink. That is, in the present embodiment, the dyeing process is performed based on each of the plurality of set temporary estimation jobs, whereby the temporary estimation job data according to the ink of the single color is acquired for each of the plurality of colors of ink. Therefore, when the temporary estimation formula is set based on the temporary estimation job data, data can be processed for a color of each ink, and thus the temporary estimation formula is easily generated more appropriately.

Further, in the present embodiment, the plurality of temporary estimation jobs include a plurality of temporary estimation jobs in which a density of the ink of the single color is changed and the dyeing process is performed a plurality of times. That is, according to the plurality of temporary estimation jobs set in the present embodiment, a plurality of job data acquired by performing the dyeing process a plurality of times while changing the density of the ink of the single color are included. Therefore, the appropriate temporary estimation formula in consideration of the change in the density of the ink of the single color is easily generated.

The description of FIG. 6 is referred to again. The control device 70 determines whether an instruction to execute at least one of the plurality of set temporary estimation jobs has been input (S12). In the present embodiment, the user can designate at least one of the plurality of temporary estimation jobs and input an instruction to execute the designated temporary estimation job by operating the operation unit. When no execution instruction is input (S12: NO), the process proceeds to S19.

When the instruction to execute the temporary estimation job is input (S12: YES), the control device 70 performs the dyeing process (that is, the printing process, the transfer process, and the dye fixing process) for the lens based on the parameters of the designated temporary estimation job (S14). The control device 70 acquires the color data measured by the color data measuring instrument 60 (see FIG. 1) for the lens dyed through the dyeing process (the lens on which the dye fixing process is performed without using the ink when the ink unused job is designated) (S15). As a result, the temporary estimation job data based on the designated temporary estimation job is generated.

Subsequently, the control device 70 determines whether the temporary estimation job data generated in S14 and S15 is job data having high reliability (S16). In the present embodiment, the user determines whether the reliability of the generated temporary estimation job data is high by determining whether a state of the lens through the dyeing process is good, and inputs a determination result to the control device 70. When the result indicating that the reliability of the temporary estimation job data is high is input (S16: YES), the control device 70 stores the temporary estimation job data generated in S14 and S15 in the database 72 in association with the material (S17). On the other hand, when the result indicating that the reliability of the temporary estimation job data is low is input (S16: NO), the control device 70 excludes the temporary estimation job data generated in S14 and S15 from the data referred to in a temporary estimation formula generation processing (the details will be described later) (S18). As a result, an accuracy of the correlation between the amount of ink and the color data indicated by the temporary estimation formula is easily improved.

If no instruction to end the processing is input (S19: NO), the processing of S12 to S19 is repeated, whereby the plurality of temporary estimation job data are acquired. When an end instruction is input (S19: YES), the process returns to the color information estimation processing (see FIG. 3).

The description of FIG. 3 is referred to again. The control device 70 determines whether an instruction to generate a temporary estimation formula is input by the user (S5). As described above, in the present embodiment, the instruction to generate the temporary estimation formula is input by the user operating the temporary estimation formula generation button 133 (see FIG. 7). The temporary estimation formula generation button 133 is operated after all the temporary estimation job data for the designated material is acquired. If no instruction to generate the temporary estimation formula is input (S5: NO), the process proceeds to a determination of S7. When the instruction to generate the temporary estimation formula is input (S5: YES), the control device 70 generates the temporary estimation formula indicating the correlation between the amount of ink to be printed on the base body and the color data of the lens to be dyed by the base body based on the plurality of temporary estimation job data (S6). The temporary estimation formula shows the correlation between the amount of ink and the color data when it is assumed that no fixing failure of the dye to the lens occurs.

As described above, in the temporary estimation formula generation processing (S6) in the present embodiment, the temporary estimation formula is generated for each of the plurality of types of lens materials based on the plurality of temporary estimation job data acquired for the same material. Therefore, an appropriate temporary estimation formula corresponding to the material is generated.

Subsequently, the control device 70 determines whether the instruction to perform the color information estimation processing has been input by the user (S7). If no instruction is input (S7: NO), the process returns to S1, and the processing of S1 to S8 is repeated. When the instruction to perform the color information estimation processing is input (S7: YES), the control device 70 performs the estimation processing (S8, see FIG. 8).

The overview of the estimation processing will be described. In the estimation processing, first, the plurality of approximate data are searched for with the target color as a reference. As an example, in the present embodiment, the job data designated by the user among the plurality of job data is set as reference data. The color (color data) in the set reference data is set as the target color, and the approximate data is searched for with the set target color as a reference. Subsequently, an estimation formula indicating a correlation between the amount of ink and the color data of the lens is generated based on the plurality of approximate data searched. Based on the generated estimation formula, at least one (both in the present embodiment) of the amount of ink required (that is, the required amount of ink) to be printed on the base body in order to dye the lens to the target color and the color of the lens to be dyed when the ink is printed on the base body by a predetermined amount (that is, the dyeing result) is estimated.

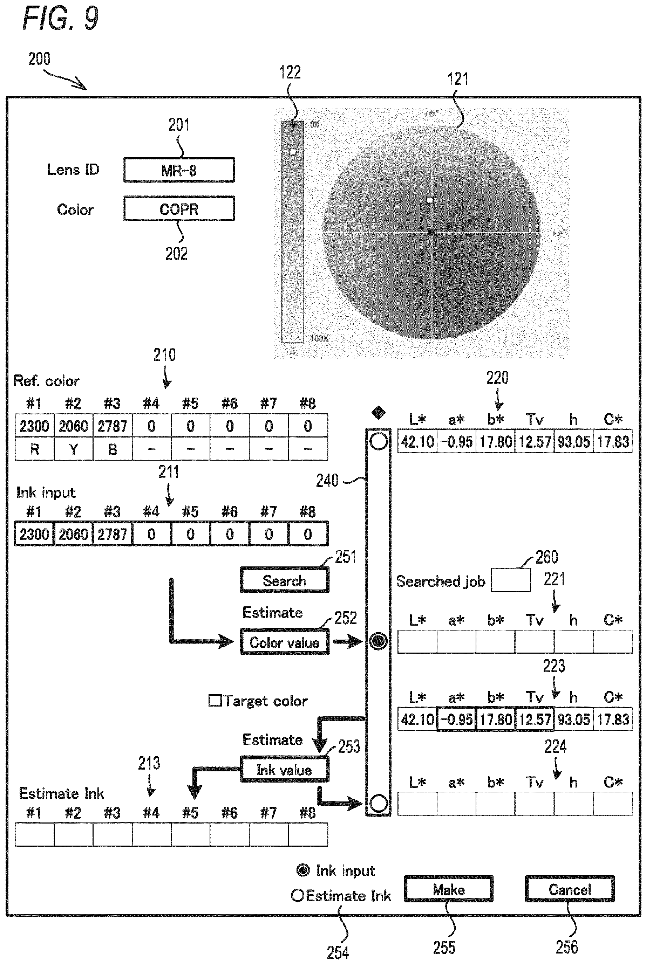

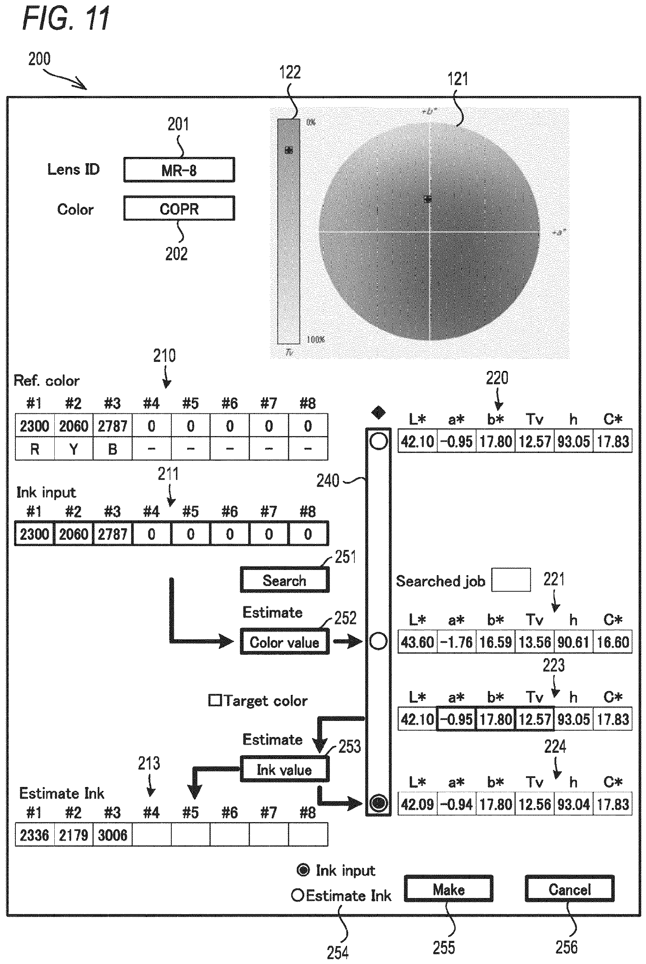

An example of a color estimation screen 200 displayed on the display device during executing the estimation processing will be described with reference to FIGS. 9 and 11. In FIGS. 9 and 11, frames in which the user can input information are indicated by thick frames, and frames in which information is automatically displayed are indicated by thin frames. The color estimation screen 200 includes a lens material designation portion 201 and a color registration portion 202. The lens material designation portion 201 designates a material of a lens whose color information is to be estimated. In the examples shown in FIGS. 9 and 11, "MR-8" is designated as the material of the lens. In the color registration portion 202, a color name (in the example shown in FIGS. 9 and 11, a name of "COPR") is registered.

The color estimation screen 200 includes a reference ink amount data display portion 210 and a reference color data display portion 220. The reference ink amount data display portion 210 displays ink amount data included in the reference data designated by the user (that is, the job data including the color data close to the target color) for each type of ink of a plurality of ink slots in the printing device 30. The reference color data display portion 220 displays color data included in the reference data designated by the user (in the present embodiment, the color data based on a measurement result of the color data measuring instrument 60). As an example, in the present embodiment, the color data is expressed by the brightness (L*), the hue (a*, b*), the luminous transmittance (Tv), the hue angle (h), and the saturation (C*).

The color estimation screen 200 includes a search button 251 and a search data number display portion 260. The search button 251 is operated by the user in order to search the plurality of approximate data across the plurality of job data with a target color as a reference. The search data number display portion 260 displays the number of searched approximate data. In the example shown in FIG. 9, the color estimation screen 200 before the approximate data is searched for is shown, and thus the search data number display portion 260 is blank.

The color estimation screen 200 includes an ink amount input portion 211, a dyeing result estimation execution button 252, and a first estimated color display portion 221. The amount of ink to be discharged from each ink slot is input to the ink amount input portion 211 by the user in order to estimate the color of the lens to be dyed (that is, the dyeing result) when the ink is printed on the base body by a predetermined amount. The dyeing result estimation execution button 252 is operated by the user in order to perform the estimation processing of the color of the lens (the dyeing result) when the amount of ink input to the ink amount input portion 211 is printed on the base body and the dyeing process is performed. The first estimated color display portion 221 displays an estimation result of the color data of the lens to be dyed when the amount of ink input to the ink amount input portion 211 is used.

The color estimation screen 200 includes a color data input portion 223, an ink amount estimation execution button 253, an estimated ink amount display portion 213, and a second estimated color display portion 224. The color data of the target color is input to the color data input portion 223 by the user in order to estimate the amount of ink required (that is, the required amount of ink) to be printed on the base body in order to dye the lens to the target color. The ink amount estimation execution button 253 is operated by the user in order to perform an estimation processing of an amount of ink necessary for dyeing the lens to the color input to the color data input portion 223. The estimated ink amount display portion 213 displays an estimation result of the amount of ink necessary for dyeing the lens to the color input to the color data input portion 223 for each ink slot. The second estimated color display portion 224 displays an estimation result of the color data of the lens to be dyed when the ink having the amount of ink displayed on the estimated ink amount display portion 213 is used. Therefore, the color data displayed on the second estimated color display portion 224 approximates the color data input to the color data input portion 223. By grasping the color data displayed on the second estimated color display portion 224, the user can confirm whether there is a high possibility that the lens is dyed to the target color.

The color estimation screen 200 includes the color space chromaticity diagram 121, the luminous transmittance display portion 122, and a display selection portion 240. As described above, each of the color space chromaticity diagram 121 and the luminous transmittance display portion 122 displays a color corresponding to the specific color data. The display selection portion 240 is operated by the user in order to select data indicating colors in the color space chromaticity diagram 121 and the luminous transmittance display portion 122 among the color data shown in each of the reference color data display portion 220, the first estimated color display portion 221, and the second estimated color display portion 224.

The color estimation screen 200 includes a registered ink amount selection portion 254, a registration button 255, and a cancel button 256. The registered ink amount selection portion 254 is operated by the user in order to select the amount of ink to be registered as a parameter to be used in the subsequent dyeing process from the amount of ink input to the ink amount input portion 211 and the amount of ink displayed on the estimated ink amount display portion 213. The registration button 255 is operated by the user to register the amount of ink selected in the registered ink amount selection portion 254. The cancel button 256 is operated by the user when the estimation processing is cancelled.

The estimation processing will be described in detail with reference to FIGS. 8 to 11. First, the control device 70 newly registers a color name (Color) depending on an instruction input by the user (S21). As described above, in the present embodiment, the user can register a color name by inputting the color name to the color registration portion 202.

The control device 70 sets the job data designated by the user among the plurality of job data stored in the database 72 as reference data (S22). The control device 70 sets a color (color data) in the set reference data as a target color (S23). Therefore, the user can easily set the target color by designating the job data including the color data close to the target color as the reference data. The number of reference data set in S22 may be one or more. When a plurality of reference data is set, the control device 70 may perform the following processing using an average value and the like of the plurality of reference data.

The control device 70 causes the color estimation screen 200 to display the ink amount data and the color data included in the set reference data (S24). Specifically, the control device 70 causes the reference ink amount data display portion 210 to display the ink amount data included in the reference data, and causes the reference color data display portion 220 to display the color data included in the reference data. Therefore, the user can easily compare a data content of the reference data and an estimation result of color information to be executed thereafter.

As shown in FIG. 9, the control device 70 according to the present embodiment also causes the ink amount input portion 211 to display the ink amount data included in the reference data in a preset manner. Therefore, the user can easily input the amount of ink in consideration of the amount of ink of the reference data to the ink amount input portion 211 simply by appropriately changing the amount of ink displayed in the ink amount input portion 211 in a preset manner when the estimation processing of the dyeing result is performed. Further, the control device 70 according to the present embodiment also causes the color data input portion 223 to display the color data included in the reference data in a preset manner. Therefore, the user can easily input the color data in consideration of the color data of the reference data to the color data input portion 223 by appropriately changing the color data displayed in the color data input portion 223 in a preset manner when the estimation processing of the amount of ink is performed.

Subsequently, the approximate data search processing (S26 to S30) will be described in detail. In the search processing (S26 to S30), the plurality of job data stored in the database 72 are searched for the approximate data being the job data at least matching a condition that the color data in the job data satisfies a regulation with the target color set in S23 as a reference.

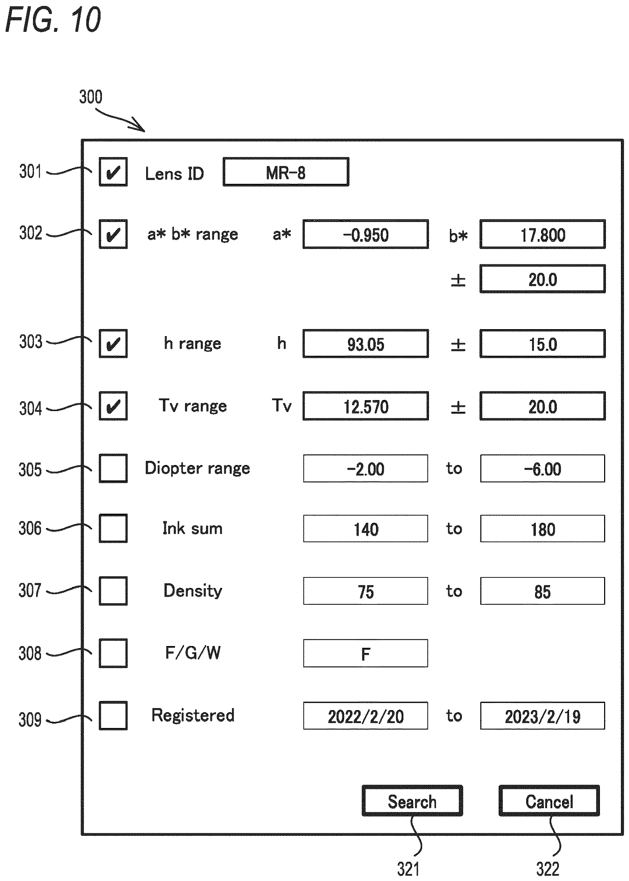

In the present embodiment, when the search button 251 (see FIGS. 9 and 11) is operated by the user, the control device 70 causes the display device to display a search condition setting screen 300 illustrated in FIG. 10. The user can designate the search condition of the approximate data by operating the operation unit and inputting various instructions on the search condition setting screen 300. When the search condition is designated (S26: YES), the control device 70 sets the designated condition as the search condition of the approximate data (S27). If no search condition is designated (S26: NO), it is determined whether an instruction to perform the search is input (S28). If no instruction to perform the search is input (S28: NO), the processing of S26 to S28 is repeated.

A method of setting a search condition of approximate data according to the present embodiment will be described with reference to FIG. 10. As shown in FIG. 10, the search condition setting screen 300 displays a lens material setting portion 301, a hue condition setting portion 302, a hue angle condition setting portion 303, a luminous transmittance condition setting portion 304, a diopter condition setting portion 305, an ink total amount condition setting portion 306, a density condition setting portion 307, a dyeing type condition setting portion 308, a timing condition setting portion 309, a search button 321, and a cancel button 322. The user can designate a search condition in a desired setting portion among the plurality of setting portions by inputting a check to a check box of the setting portion that designates the search condition among check boxes attached to the setting portions.

The lens material setting portion 301 designates a material of the lens as a search condition. In the present embodiment, the database 72 stores the plurality of job data in a state where it enables to identify the material of the lens dyed when each job data is generated. When the material of lens is designated by the lens material setting portion 301, the control device 70 searches for a plurality of approximate data on a condition that the approximate data is the job data for a material identical to a material of the designated lens. Even when the lens is dyed to the same color, different ink may be used when the materials of the lens are different. In addition, even when the lenses of different materials are dyed using the same ink, a degree of dyeing may change depending on the materials. On the other hand, a generation processing of an estimation formula (the details will be described later) is performed based on the approximate data for the same material as the designated material of the lens, whereby the color information is easily estimated appropriately depending on the material. The lens material setting portion 301 may receive, in a preset manner, the material of the lens dyed, when the reference data is generated. In this case, it is more easily searched for the approximate data of a material identical to the material of a lens of the reference data.

In the hue condition setting portion 302, a hue range is designated as a search condition. In the hue angle condition setting portion 303, a hue angle range is designated as a search condition. In the luminous transmittance condition setting portion 304, a luminous transmittance range is designated as a search condition. The hue, the hue angle, and the luminous transmittance are examples of a method for expressing a color. The control device 70 searches for the plurality of approximate data on a condition that the approximate data is the job data of a color within the range set by the setting portions 302 to 304. In the present embodiment, the setting portions 302 to 304 receive, in a preset manner, the hue, the hue angle, and the luminous transmittance of the target color set in S23 as median values of a range of the search conditions. Therefore, it is easily and appropriately searched for the plurality of approximate data whose color data is close to the target color.

A specific method for searching for approximate data with a target color as a reference can be selected as appropriate. In the present embodiment, as described above, by designating a color range as a search condition, the job data of a color within the designated range is searched for the approximate data. However, for example, the search condition may be set such that a predetermined number of job data are searched for approximate data in ascending order of closeness of color data corresponding to a target color. In this case, the approximate data close to the target color is also appropriately searched for with the target color as a reference.

In the diopter condition setting portion 305, a diopter range of the dyed lens is designated as a search condition. The control device 70 searches for the plurality of approximate data on a condition that the approximate data is data of the lens of the diopter within the range set by the diopter condition setting portion 305. Even if the type of ink and the amount of ink to be used are the same, a degree of dyeing of the lens may change when the diopter of the lens differs. Therefore, by adding the diopter range to the search conditions, the approximate data whose conditions are close to a target dyeing process can be searched for more easily. As a result, the accuracy of the estimation processing of color information to be described later is further easily improved.

In the ink total amount condition setting portion 306, a range of a total amount of ink used when the job data is generated is designated as a search condition. The control device 70 searches for the plurality of approximate data on a condition that the approximate data is data in which the total amount of ink within the range set by the ink total amount condition setting portion 306 is used. When the total amount of ink to be used changes, a degree of re-sublimation of the dye in the dye fixing process also changes, and thus the degree of dyeing of the lens also easily changes. Therefore, by adding the range of the total amount of ink to the search conditions, it can be more easily searched for the approximate data whose conditions are close to the objected dyeing process. As a result, the accuracy of the estimation processing of color information to be described later is further easily improved.

In the density condition setting portion 307, a density range of the ink when the job data is generated is designated as a search condition. The control device 70 searches for the plurality of approximate data on a condition that the approximate data is data of a density of the ink within the range set by the density condition setting portion 307. When the density of the ink changes, the degree of dyeing the lens may also change. Therefore, by adding the density range of the ink to the search conditions, it can be more easily searched for the approximate data whose conditions are close to the objected dyeing process. As a result, the accuracy of the estimation processing of color information to be described later is further easily improved.

In the dyeing type condition setting portion 308, a type of dyeing (in the present embodiment, one of the full dyeing (F), the gradation (G), and the W color (W)) is designated as a search condition. The control device 70 searches for the plurality of approximate data on a condition that the approximate data matches the type set by the dyeing type condition setting portion 308. In addition, in the timing condition setting portion 309, a range of a time when a process for generating job data (for example, at least one of the dyeing process and a data storage process) is performed is designated as a search condition. The control device 70 searches for the plurality of approximate data on a condition that the approximate data is job data generated within the range of the time set by the timing condition setting portion 309. The search button 321 is operated by the user in order to perform the search processing of the approximate data based on the set search conditions. The cancel button 322 is operated by the user to cancel the search processing of the approximate data.

The description of FIG. 8 is referred to again. When an instruction to perform the search processing of the approximate data is input by the user (S28: YES), the control device 70 searches the plurality of job data stored in the database 72 for the job data as the approximate data matching the set search condition (all search conditions when a plurality of search conditions are set) (S30). In the present embodiment, when the plurality of approximate data are searched for, the number of searched approximate data is displayed on the search data number display portion 260 (see FIG. 11). Therefore, the user can also predict the accuracy or the like of the estimation of the color information by grasping the number of the searched approximate data.

Subsequently, the control device 70 generates an estimation formula indicating a correlation between the amount of ink to be printed on the base body and the color data of the lens to be dyed by the base body based on the plurality of approximate data searched in S30 (S31). According to the control device 70 according to the present embodiment, an estimation formula for estimating the color information is generated based on the job data including a set of the ink amount data and the color data in the dyeing process performed in the past. Therefore, the color information is easily estimated more accurately in a state where the influence on a change in a degree of dyeing due to an individual difference in the printing devices 30, an installation environment of the dyeing system 1, an individual difference in heating units that heat a lens in the dye fixing process, and the like is reduced.

Furthermore, according to the control device 70 of the present embodiment, an estimation formula for estimating the color information is generated based on the plurality of job data (approximate data) whose color data satisfies the regulation with the target color set in S23 as a reference. When the dyeing process is performed a plurality of times, as long as the colors of the lenses to be dyed are approximate, the amounts of ink to be used (for example, a total amount of ink discharged per unit area and a mixed amount of a plurality of types of ink) are also approximate. As long as the amounts of ink to be used are approximate, the degree of dyeing of the lens is also easily approximate. Therefore, by generating the estimation formula based on the plurality of job data having approximate colors, the color information is easily estimated more accurately in a state where the influence on the change in the degree of dyeing due to a change in the amount of ink to be used is reduced. In a vapor phase transfer dyeing method, when the amount of ink to be used is changed, a degree of re-sublimation of the dye in the dye fixing process also changes. In contrast, according to the control device 70 of the present embodiment, an estimation formula is generated based on the plurality of job data in which the degree of re-sublimation of the dye is also approximate. Therefore, the technique of the present disclosure is more useful particularly in the case of using the vapor phase transfer dyeing method.

In S31 of the present embodiment, an estimation formula is generated based on the temporary estimation formula generated in S6 (see FIG. 3) and the plurality of approximate data searched in S30. As described above, the temporary estimation formula shows the correlation between the amount of ink and the color data when it is assumed that no fixing failure of the dye to the lens occurs. When no fixing failure of the dye occurs, the color information can be estimated by the temporary estimation formula. However, in an actual dyeing process, a degree of fixing failure of the dye to the lens often changes depending on the color of the resin body to be dyed. Therefore, the approximate data searched according to the target color may be job data in which a fixing failure of the dye depending on the color to be dyed occurs. Therefore, when an estimation formula is generated, the estimation formula is generated in which the influence of the fixing failure of the dye depending on the color to be dyed is appropriately considered while the temporary estimation formula is used as a base by referring to both the temporary estimation formula and the plurality of approximate data searched. As a result, an accuracy of color estimation is more easily improved. As an example, in the present embodiment, a formula indicating an error correlation between the color data obtained by the temporary estimation formula and the color data of the searched approximate data is generated as the estimation formula. As a result, the estimation formula in which the influence of the fixing failure of the dye depending on the color to be dyed is appropriately considered is generated.

As described above, the database 72 stores the plurality of job data in the state where it enables to identify the material of the lens dyed when each job data is generated. In S30, the plurality of job data is searched for the plurality of approximate data on the condition that the approximate data is the job data for a material identical to a material of a designated lens. As described above, even when the lens is dyed to the same color, different ink may be used when the materials of the lens are different. In addition, even when the lenses of different materials are dyed using the same ink, a degree of dyeing may change depending on the materials. On the other hand, the estimation formula is generated based on the approximate data for the same material as the designated material of the lens, and the color information is estimated based on the generated estimation formula, whereby the color information is easily estimated appropriately depending on the material.

Specifically, in S31 of the present embodiment, the material of the lens of the temporary estimation job data referred to generate the temporary estimation formula and the material of the lens of the plurality of approximate data are all common. That is, the estimation formula is generated based on the temporary estimation formula for a specific material of a lens (for example, a material for which color information is to be estimated) and the plurality of approximate data. Therefore, the color information is easily estimated appropriately depending on the material.

The description of FIG. 8 is referred to again. When the estimation formula is generated in S31, the control device 70 determines whether an instruction to estimate a color of the lens to be dyed (that is, the dyeing result) when the ink is printed on the base body by a predetermined amount is input (S33). As shown in FIG. 11, when the control device 70 is caused to estimate the dyeing result, the user inputs the amount of ink to the ink amount input portion 211 and operates the dyeing result estimation execution button 252. When the instruction to estimate the dyeing result is input (S33: YES), the control device 70 estimates a color (color data) of the lens to be dyed with the amount of ink input to the ink amount input portion 211 as color information based on the estimation formula generated in S31 (in the present embodiment, the estimation formula for the material common to the material for which the color information is to be estimated) (S34). An estimation result of the color data in S34 is displayed on the first estimated color display portion 221.

In addition, the control device 70 determines whether an instruction to estimate an amount of ink required (that is, a required amount of ink) to be printed on the base body in order to dye the lens to the target color has been input (S36). As shown in FIG. 11, when the control device 70 is caused to estimate the required amount of ink, the user inputs the color data of the target color to the color data input portion 223 and operates the ink amount estimation execution button 253. When the instruction to estimate the required amount of ink is input (S36: YES), the control device 70 estimates the amount of ink required to dye the lens to the color input to the color data input portion 223 as color information based on the estimation formula generated in S31 (in the present embodiment, the estimation formula for the material common to the material for which the color information is to be estimated) (S37). An estimation result of the color data in S37 is displayed on the estimated ink amount display portion 213. In addition, the control device 70 estimates the color data of the lens to be dyed when the ink having the amount of ink displayed on the estimated ink amount display portion 213 is used, based on the estimation formula generated in S31, and causes the second estimated color display portion 224 to display the color data.

As described above, the registered ink amount selection portion 254 is operated by the user in order to select the amount of ink to be registered as a parameter to be used in the subsequent dyeing process from the amount of ink input to the ink amount input portion 211 and the amount of ink displayed on the estimated ink amount display portion 213. When an instruction to actually perform the dyeing process is input after the color information is estimated in S34 or S37, the control device 70 actually performs the dyeing process of the lens L based on the amount of ink selected by the registered ink amount selection portion 254, and measures the color data of the dyed lens by the color data measuring instrument 60. Thereafter, when the registration button 254 is operated, the control device 70 newly generates job data including information on the amount of ink used in the dyeing process, color data measured by the color data measuring instrument 60, and the like, and stores (registers) the job data in the database 72. As a result, the number of samples of the job data is increased, and an estimation accuracy of the color information to be executed thereafter is improved. When an instruction to end the processing is input (S39: YES), the estimation processing ends, and the process returns to the color information estimation processing (see FIG. 3).

The techniques disclosed in the above embodiment are merely examples. Therefore, it is also possible to change the techniques exemplified in the above embodiment. For example, only a part of the plurality of techniques exemplified in the above embodiment may be adopted. As an example, in S31 (see

FIG. 8) of the above embodiment, an estimation formula indicating a correlation between the amount of ink and the color data is generated based on the temporary estimation formula and the plurality of approximate data. However, it is also possible to generate an estimation formula based on the plurality of approximate data without using the temporary estimation formula. In this case, the color information is also easily estimated more accurately in a state where the influence on the change in the degree of dyeing due to a change in the amount of ink to be used is reduced. In addition, when the influence of the yellowing of the lens in the dye fixing process is small, the temporary estimation job data may not include the clear data. The temporary estimation job may be set depending on an instruction input by the user (that is, manually).

The processing of setting the target color in S23 of FIG. 8 is an example of a "target color setting step". The processing of searching for the plurality of approximate data in S26 to S30 of FIG. 8 is an example of an "approximate data search step". The processing of generating the estimation formula in S31 of FIG. 8 is an example of an "estimation formula generation step". The processing of estimating the color information in S33 to S37 of FIG. 8 is an example of a "color information estimation step". The processing of generating the temporary estimation formula in S6 of FIG. 3 is an example of a "temporary estimation formula generation step". The processing of automatically setting the temporary estimation job in S11 of FIG. 6 is an example of a "temporary estimation process setting step".

## Claims

1. A color information estimation program executed by a color information estimation device that estimates color information related to a color in a dyeing process of a resin body, the dyeing process including:
a printing process of printing ink containing a dye on a base body using a printing device;
a transfer process of transferring the dye contained in the ink to the resin body in a state where the resin body faces the base body on which the ink is printed; and
a dye fixing process of heating the resin body to which the dye is transferred, to fix the dye to the resin body,
wherein a database stores a plurality of job data including a set of ink amount data indicating an amount of ink printed on a base body and color data measured for a resin body dyed by the base body in the dyeing process performed in the past, and
the color information estimation program comprising instructions that, when executed by a control unit of the color information estimation device, cause the color information estimation device to perform:
a target color setting step of setting a target color of the resin body;
an approximate data search step of searching the plurality of job data stored in the database for a plurality of approximate data which are the job data at least matching a condition that the color data satisfies a regulation with the set target color as a reference;
an estimation formula generation step of generating an estimation formula indicating a correlation between an amount of ink to be printed on the base body and color data of the resin body to be dyed by the base body, based on the plurality of approximate data searched in the approximate data search step; and
a color information estimation step of estimating, using the estimation formula generated in the estimation formula generation step, at least one of an amount of ink required to be printed on the base body in order to dye the resin body to the target color and a color of the resin body to be dyed when a predetermined amount of ink is printed on the base body, as the color information.

2. The color information estimation program according to claim 1, further comprising instructions that cause the color information estimation device to perform:
an temporary estimation formula generation step of generating a temporary estimation formula indicating a correlation between an amount of ink to be printed on the base body and color data of the resin body to be dyed by the base body, based on temporary estimation job data including a plurality of job data of dyeing process in which it is determined that no fixing failure of the dye to the resin body occurs, and in which at least one of a type of used ink and an amount of the used ink differs from each other between the plurality of job data, and
in the estimation formula generation step, the estimation formula is generated based on the temporary estimation formula and the plurality of approximate data.

3. The color information estimation program according to claim 2,
wherein the plurality of temporary estimation job data include the job data acquired as a result of heating a resin body to which no dye is transferred as is a case with the dye fixing process.

4. The color information estimation program according to claim 2,
wherein in the temporary estimation formula generation step, the temporary estimation formula is generated for each of a plurality of types of resin body materials, based on the temporary estimation job data for the same material, and
in the estimation formula generation step, the estimation formula is generated based on the temporary estimation formula for a material for which the color information is to be estimated and the plurality of approximate data.

5. The color information estimation program according to claim 2, further comprising instructions that cause the color information estimation device to perform:
a temporary estimation process setting step of automatically setting parameters of the dyeing process necessary for acquiring each of the plurality of temporary estimation job data.

6. The color information estimation program according to claim 2,
wherein the plurality of temporary estimation job data include the job data acquired in the dyeing process using a single color ink, for each of a plurality of colors of ink.

7. The color information estimation program according to claim 1,
wherein the database stores the plurality of job data in a state where it enables to identify a material of the resin body dyed when each job data is generated, and
in the approximate data search step, the plurality of approximate data are searched on a condition that the approximate data is the job data for a material identical to a material of a designated resin body.

8. A color information estimation device that estimates color information related to a color in a dyeing process of a resin body, the dyeing process including:
a printing process of printing ink containing a dye on a base body using a printing device;
a transfer process of transferring the dye contained in the ink to the resin body in a state where the resin body faces the base body on which the ink is printed; and
a dye fixing process of heating the resin body to which the dye is transferred, to fix the dye to the resin body,
wherein a database stores a plurality of job data including a set of ink amount data indicating an amount of ink printed on a base body and color data measured for a resin body dyed by the base body in the dyeing process performed in the past, and
a control unit of the color information estimation device is configured to:
set a target color of the resin body;
search the plurality of job data stored in the database for a plurality of approximate data which are the job data at least matching a condition that the color data satisfies a regulation with the set target color as a reference;
generate an estimation formula indicating a correlation between an amount of ink to be printed on the base body and color data of the resin body to be dyed by the base body, based on the plurality of approximate data searched; and
estimate, using the generated estimation formula, at least one of an amount of ink required to be printed on the base body in order to dye the resin body to the target color and a color of the resin body to be dyed when a predetermined amount of ink is printed on the base body, as the color information.
